Europäisches Patentamt

(19) **European Patent Office**

**Office européen des brevets**

(11) Numéro de publication: **0 052 528**
**B1**

(12) **FASCICULE DE BREVET EUROPEEN**

(45) Date de publication du fascicule du brevet:
**05.12.84**

(51) Int. Cl.³: **B 60 B 33/02**, B 62 B 5/04

(21) Numéro de dépôt: **81401411.4**

(22) Date de dépôt: **11.09.81**

(54) **Roue pour chariots, notamment de magasins à libre-service, permettant le blocage du chariot dans des escaliers roulants et chariot muni de cette roue.**

(30) Priorité: **14.11.80 FR 8024216**

(43) Date de publication de la demande:
**26.05.82 Bulletin 82/21**

(45) Mention de la délivrance du brevet:
**05.12.84 Bulletin 84/49**

(84) Etats contractants désignés:
**DE GB**

(56) Documents cités:
**FR - A - 2 099 196**

(73) Titulaire: **ATELIERS REUNIS, 13, rue de la Mairie B.P.
No 47, F-67300 Schiltigheim (FR)**

(72) Inventeur: **Levy Joseph, Marc, 33, Allée de la Robertsau,
F-67000 Strasbourg (FR)**

(74) Mandataire: **Tony-Durand, Serge, Cabinet
Tony-Durand 22, Boulevard Voltaire, F-75011 Paris (FR)**

Il est rappelé que: Dans un délai de neuf mois à compter de la date de publication de la mention de la délivrance du brevet euro-péen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

ACTORUM AG

## Description

La présente invention a pour objet une roue pour chariots, notamment de magasins à libre-service dans lesquels les étages sont reliés par des escaliers roulants ou des tapis roulants nervurés.

Cependant, cette roue pourrait être utilisée pour le transport de chariots de types différents, sur des transporteurs et/ou des escaliers roulants nervurés.

On connaît diverses sortes de roues ou roulettes de chariots, munies de dispositifs permettant de freiner ou de bloquer la roue et par conséquent le chariot dans des tapis roulants et des escaliers roulants nervurés, ou bien uniquement dans des escaliers roulants, éventuellement non nervurés.

Le brevet français 1 362 308 décrit ainsi un chariot dont les roues sont munies de patins latéraux placés dans l'axe de la roue, légèrement au-dessus de la surface d'appui de la roue sur le sol, la roue présentant des bandes saillantes de roulement. Lorsque le chariot arrive sur un tapis roulant nervuré, les bandes saillantes s'engagent dans les rainures du tapis roulant, et les patins latéraux agissent automatiquement comme freins en venant prendre appui sur les nervures du tapis roulant. Le brevet allemand 2 656 322 décrit également des roues équipées d'un frein agissant de façon similaire, mais qui est placé entre les deux bandes de roulement de la roue.

Cependant, ces freins ne peuvent bloquer le chariot que lorsque celui-ci s'engage sur un tapis roulant nervuré, dont l'inclination n'est pas trop forte. Ils ne peuvent freiner ou bloquer le chariot lorsque celui-ci est engagé dans un escalier roulant, nervuré ou non.

On a donc proposé de munir les roues des chariots d'organes de freinage pouvant agir lorsque le chariot est dans un escalier roulant. Ainsi, le FR-A-2 099 196 décrit des roues sur la chape desquelles est fixé un étrier dont les extrémités, situées respectivement devant et derrière la roue correspondante, sont aptes à servir l'une ou l'autre de patin d'appui sur l'une des marches d'un escalier roulant, lorsque le chariot se trouve placé sur un tel escalier et est de ce fait incliné vers l'avant ou vers l'arrière.

Cependant l'inclinaison des escaliers roulants peut varier, suivant les installations et dans certains cas les patins de blocage ainsi prévus ne sont pas en mesure d'assurer un blocage efficace. Par ailleurs, du fait même de leur position, ces patins sont amenés quelquefois à frotter sur les peignes prévus respectivement à l'entrée et à la sortie d'un escalier roulant.

C'est pourquoi la présente invention a pour objet une roue du type en cause, qui est conçue pour éviter ces inconvénients.

A cet effet, cette roue comporte une fourche portant au moins un patin de blocage situé dans le plan de cette roue et cette fourche est montée pivotante autour de l'axe X–X de la roue, et des moyens sont prévus pour régler sa position fonction de l'inclinaison de l'escalier.

Ainsi il est possible de régler la position en hauteur du patin de blocage pour qu'il soit parfaitement efficace et qu'il ne risque pas de frotter sur les peignes prévus aux extrémités de l'escalier roulant.

La fourche étant réalisée d'une seule pièce, solidaire d'une part de l'axe de la roue, et d'autre part de la partie supérieure de la chape de celle-ci, on obtient une construction particulièrement robuste, qui permet au patin de blocage de supporter des efforts importants pendant la montée ou la descente d'un escalier roulant, sans que sa fourche de support ne risque de se desserrer. Ceci constitue également un avantage par rapport à la réalisation connue mentionnée ci-dessus, dans laquelle l'étrier de blocage est simplement fixé à la partie inférieure de la chape de la roue au niveau de l'axe de cette dernière, au moyen de boulons qui sont susceptibles de se desserrer progressivement.

La roue selon l'invention peut être équipée d'un patin avant et d'un patin arrière, servant alternativement pendant la descente et pendant la montée d'un escalier roulant, ainsi que de façon connue en soi, d'un patin latéral placé dans l'axe de la roue, et qui agit lorsque la roue est sur un transporteur nervuré ou sur les marches nervurées au début d'un escalier roulant. Au fur et à mesure que le plan du chariot s'incline progressivement ou au contraire s'élève progressivement sur l'escalier, le patin latéral est dégagé et le patin avant ou arrière prend le relais pour bloquer le chariot pendant la descente ou la montée.

D'autres particularités et avantages de l'invention apparaîtront au cours de la description qui va suivre. Aux dessins annexés, on a représenté à titre d'exemples non limitatifs deux formes de réalisation de l'invention.

La figure 1 est une vue en élévation latérale d'une forme de réalisation de la roue selon l'invention, destinée à équiper un chariot non représenté.

La figure 2 est une vue en élévation frontale de la roue de la figure 1.

La figure 3 est une vue de dessus d'une variante de réalisation de la roue des figures 1 et 2.

La figure 4 est une vue en élévation latérale d'un chariot équipé d'une roue arrière selon l'invention, au moment où le chariot commence la montée sur un escalier roulant.

La figure 5 est une vue en élévation partielle à échelle agrandie de la roue équipant le chariot de la figure 4, au moment où cette roue quitte le peigne d'entrée de l'escalier roulant et s'engage sur les marches de celui-ci.

La figure 6 est une vue analogue à la figure 4 montrant la position du chariot et du patin de blocage équipant sa roue arrière, pendant la montée du chariot sur l'escalier roulant.

Les figures 7 et 8 sont des vues en élévation montrant la position de la roulette et de son patin de blocage pour deux inclinaisons différentes de l'escalier.

2

La figure 9 est une vue en élévation du chariot lorsque celui-ci parvient en haut de l'escalier roulant.

La figure 10 est une vue en élévation à échelle agrandie de la roue du chariot de la figure 9.

La figure 11 est une vue en élévation latérale d'un chariot équipé de roues arrières conformes aux figures 1 et 2, c'est-à-dire munies de patins avant et arrière de blocage, lorsque le chariot amorce la descente d'un escalier roulant.

La figure 12 est une vue en élévation à échelle agrandie montrant la roue sur le peigne d'entrée de l'escalier, dans la position de la figure 11.

La figure 13 est une vue en élévation du chariot de la figure 11 pendant sa descente de l'escalier roulant.

Les figures 14 et 15 sont des vues en élévation à échelle agrandie de la roue du chariot de la figure 13, montrant les positions des patins de blocage pour des inclinaisons différentes de l'escalier.

La figure 16 est une vue en élévation du chariot à la fin de sa descente de l'escalier, lorsque ses roues avant arrivent sur le peigne de sortie.

La figure 17 est une vue en élévation à échelle agrandie de la roue du chariot de la figure 16.

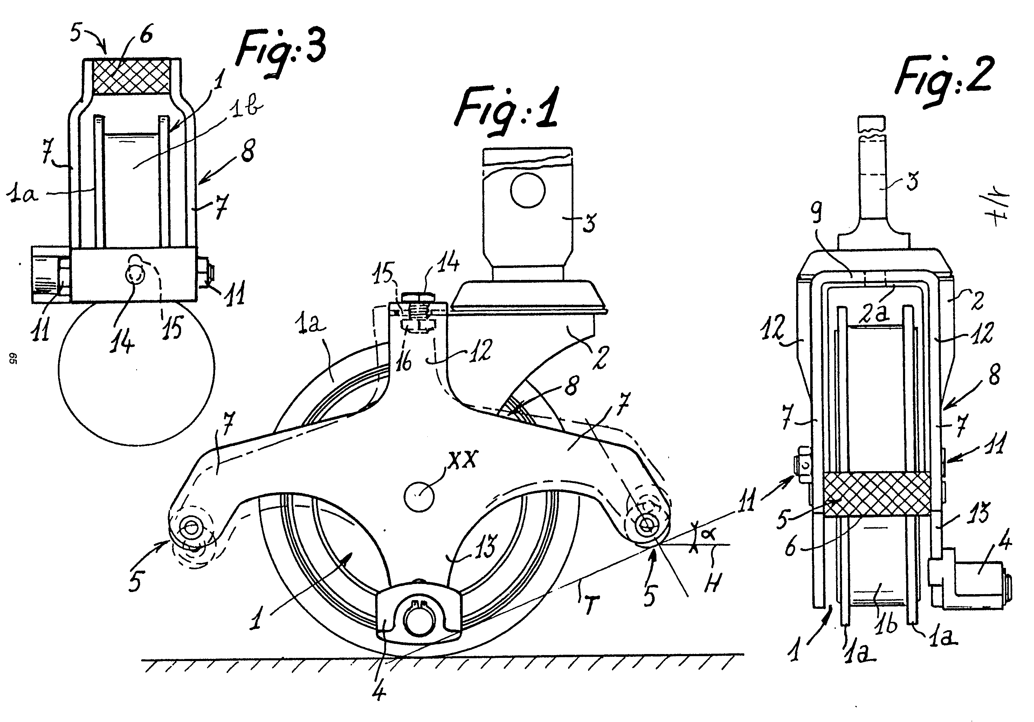

La roue représentée aux figures 1 et 2 est destinée à équiper un chariot non représenté, de préférence mais non exclusivement un chariot pour magasins à libre-service dans lesquels les différents étages sont reliés par des escaliers roulants ou des tapis roulants nervurés.

Dans ce type de magasin, il est important pour la sécurité des clients que les chariots remplis de marchandises, et sur lesquels sont éventuellement placés de jeunes enfants, puissent être efficacement freinés ou bloqués lorsque les clients les engagent sur des tapis roulants inclinés nervurés, ou sur des escaliers roulants afin de passer d'un niveau du magasin à l'autre.

La roue 1 est du type comprenant deux bandes de roulement périphérique 1a faisant saillie par rapport à une bande centrale 1b, et par lesquelles la roue 1 prend appui sur le sol.

Les bandes saillantes 1a sont dimensionnées de façon à pouvoir venir s'introduire dans les rainures séparant les nervures des tapis roulants ou des marches des escaliers roulants.

La roue 1 est montée dans une chape 2 sur laquelle est fixée de façon connue une patte 3 solidarisée avec le cadre inférieur (non représenté) du chariot.

De façon connue également, la roue est munie d'un patin latéral 4 de freinage, destiné à freiner ou bloquer le chariot lorsque celui-ci, s'engage sur un tapis roulant nervuré ou sur le début d'un escalier roulant à marches nervurées, les bandes saillantes 1a s'engageant comme indiqué précédemment entre les nervures de ceux-ci.

La roue est également pourvue de deux patins similaires 5 placés dans le plan général de la roue 1, et adaptés pour bloquer celle-ci lorsque le chariot est engagé dans un escalier roulant.

La tangente T à la surface d'appui du patin 5 sur l'escalier et à la partie inférieure de la circonférence de la roue 1, c'est-à-dire plus précisément dans l'exemple décrit la partie inférieure de la bande centrale 1b, est inclinée sur l'horizontale H d'un angle α compris entre 20 et 37 degrés environ (26 degrés sur la figure 1).

Complémentairement, la surface d'appui du patin 5 est située à une hauteur comprise entre environ la moitié du rayon de la roue 1, et plus précisément des bandes de roulement 1a, et la hauteur de l'axe X–X de celle-ci. On a représenté en traits mixtes à la figure 1 les positions extrêmes des patins de blocage 5, le patin de droite étant dans sa position supérieure maximum, et le patin de gauche dans sa position inférieure limite.

Chaque patin 5 est constitué, dans l'exemple décrit, par une entretoise cylindrique 6 moletée, dont les extrémités sont serties aux bras parallèles 7 d'une fourche 8 qui s'étendent de chaque côté de la roue 1 et sont reliés par une partie supérieure transversale 9 au-dessus de la roue 1. Cette partie intermédiaire 9 vient coiffer une partie 2a de la chape 2, sur laquelle elle est maintenue appliquée fortement par des boulons 11 traversant la fourche 8 et les parties inférieures de la chape 2, dans l'axe X–X de la roue 1.

L'étrier ou fourche 8 comporte ainsi, pour chaque patin de blocage 5, une paire de bras 7 s'étendant à peu près radialement par rapport à la roue 1, et qui se rejoignent au-dessus de l'axe de celle-ci en étant prolongés par des bras verticaux 12 reliés par la partie supérieure 9. Cet ensemble est complété par un bras radial inférieur 13 portant à son extrémité inférieure le patin latéral de freinage 4. Les éléments 7, 12, 13 et 9 sont réalisés monobloc et constituent donc une pièce venue de fonderie ou en tôle épaisse emboutie extrêmement solide.

Lorsque la roue s'engage sur un escalier roulant, l'ensemble formé par la chape 2 et les bras 7, 12, 13 avec leurs patins 4, 5 pivote autour de l'axe X–X, de sorte que l'un des patins 5 vient en contact avec la surface de l'escalier tandis que l'autre se relève; le patin en contact avec l'escalier assure alors le blocage du chariot comme cela sera expliqué plus en détail ci-après.

La position angulaire des entretoises ou patins de blocage 6, repérée par l'inclinaison α de la tangente T sur l'horizontale, peut être réglée après positionnement convenable des branches 12 de l'étrier 8 sur la chape 2, par serrage des boulons 11.

Comme illustrée à la figure 3 et en traits mixtes à la figure 1, des moyens sont prévus pour régler la position angulaire des patins 5 en fonction de l'inclinaison de l'escalier. Ces moyens consistent dans un boulon ou téton 14, traversant la partie supérieure 9 de l'étrier 8, ainsi qu'un trou oblong 15 ménagé dans la partie transversale 2a de la chape 2, et allongé dans le plan vertical médian de la roue 1, comme on le voit clairement à la figure 3.

Dans ces conditions, pour régler les positions des patins 5, il suffit de desserrer le boulon 14 et de le faire coulisser jusqu'à l'emplacement voulu dans le trou 15, ce coulissement entraînant le pivotement de l'étrier 8 autour de l'axe X–X, bien entendu après avoir desserré les boulons 11. On visse ensuite le boulon 14 avec l'écrou 16 pour maintenir l'étrier 8 et les patins 5 dans la position choisie, entre les limites angulaires mentionnées précédemment.

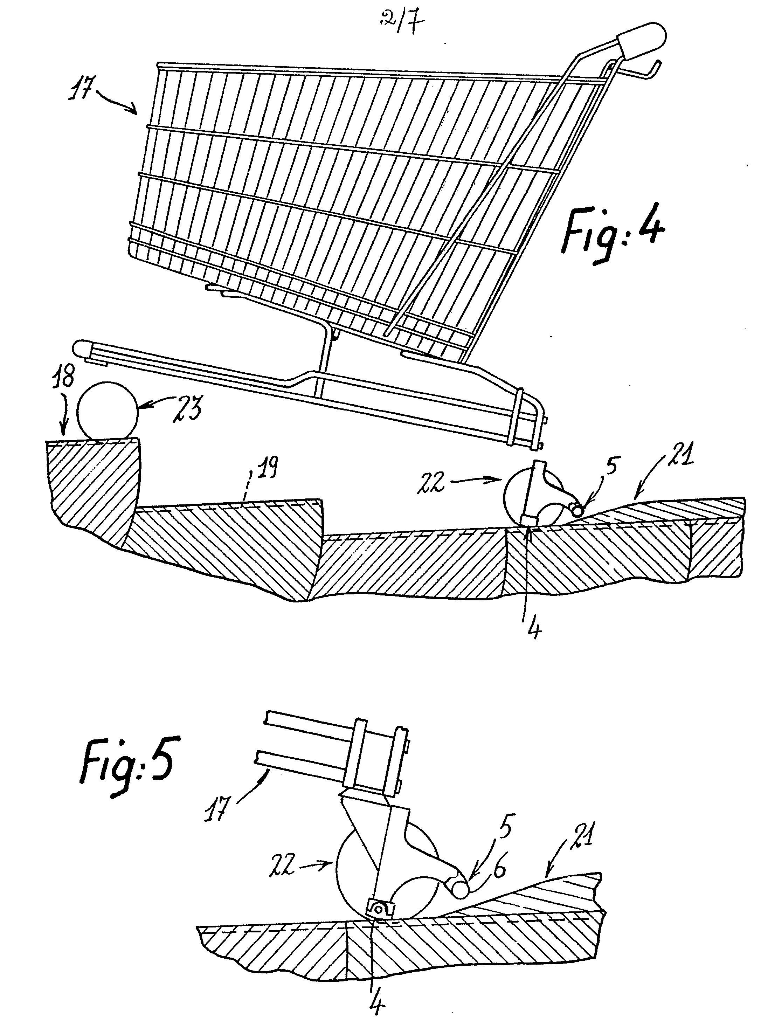

Les figures 4 à 10 représentent les phases successives de la montée d'un chariot 17 sur un escalier roulant 18 dont les marches présentent des rainures 19 et se déplacent sous un peigne d'entrée 21. Le chariot 17 est équipé dans cet exemple de roues arrière 22 pourvues chacune d'un seul patin arrière 5 de blocage. Chaque roue 22 est également munie d'un patin latéral 4 de freinage.

La montée du chariot 17 sur l'escalier roulant 18 s'effectue de la manière suivante.

Les bandes de roulement 1a des roues avant 23 et arrière 22 étant enfoncées dans les rainures 19, le frein latéral 4 repose sur les nervures séparant les rainures 19, et retient le chariot 17 pendant que celui-ci se soulève graduellement par l'avant. En même temps, les roues arrière 22 basculent ainsi que les freins arrière 5, mais l'élévation de ceux-ci au-dessus du peigne 21 est suffisante pour empêcher que les freins 5 ne viennent frotter sur celui-ci. La position angulaire de la roue 22 et des freins 4, 5 est visible plus clairement à la figure 5, sur laquelle on voit que lorsque les roues 22 quittent le peigne 21, les freins 5 sont encore situés sensiblement au-dessus du peigne 21.

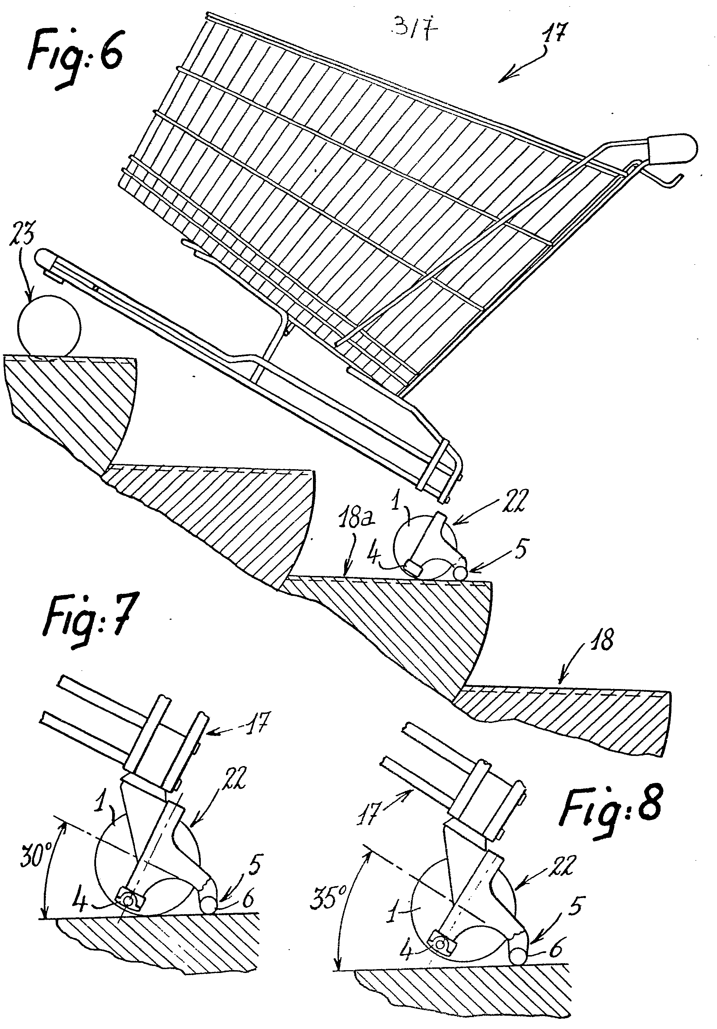

Aux fig. 6 et 7 on voit la position du chariot 17 pendant la montée sur l'escalier 18: celui-ci ayant une pente d'environ 30 degrés, le frein latéral 4 est soulevé au-dessus de la marche correspondante 18a, tandis que le patin arrière 5 a pris le relais et est venu en appui sur la marche 18a, en bloquant le chariot 1 dans cette position pendant toute la montée sur l'escalier.

Si l'inclinaison de l'escalier est légèrement supérieure, par exemple 35 degrés (figure 8) la roue 22 se soulève au-dessus de la marche 18a, et les patins arrière 5 supportent la plus grande partie du poids du chariot. Les patins peuvent ainsi subir sans inconvénient de fortes sollicitations pendant la montée du chariot, grâce à la construction très solide formée par l'étrier 8 bloqué au niveau de l'axe de la roue 1 et sur la chape 2.

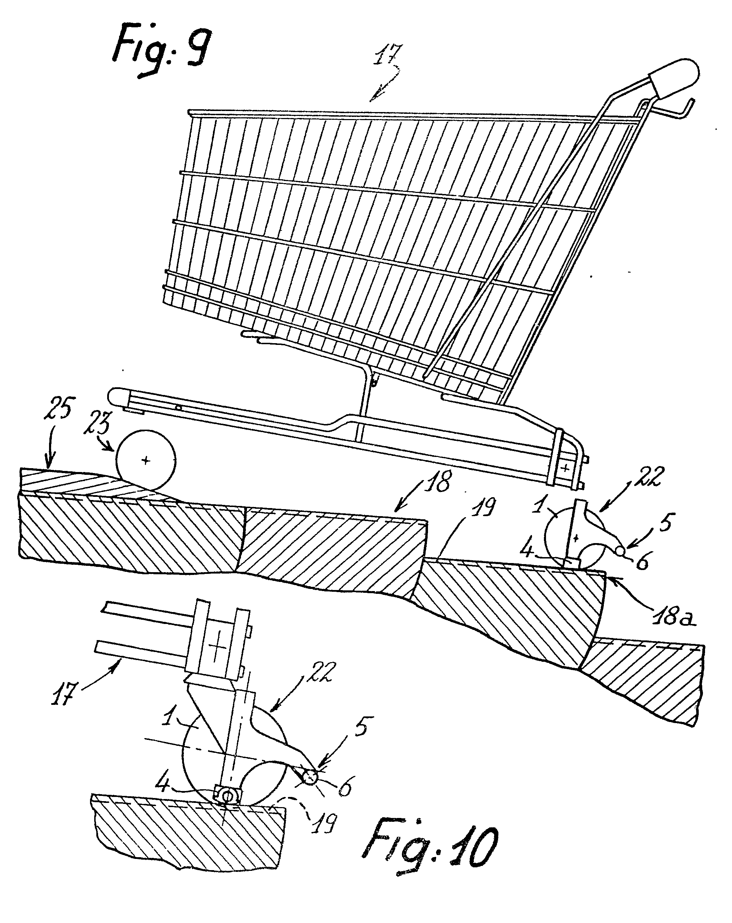

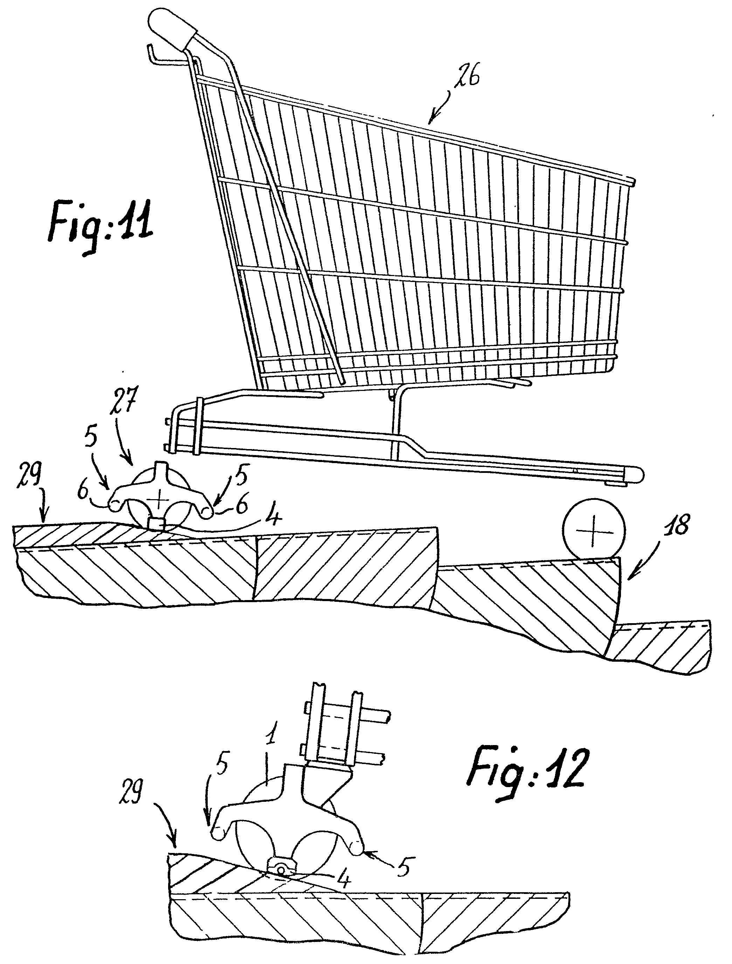

En fin de montée, les roulettes avant 23 arrivent sur le peigne 25 (figure 9), le chariot 17 s'abaisse graduellement jusqu'à l'horizontale, le frein arrière 5 se soulève et se dégage des marches 18a de l'escalier. Le frein latéral 4 reprend contact avec la marche 18a, et bloque le chariot 17. Ce blocage permet aux roulettes avant 23 de franchir le peigne de sortie 25, et par conséquent au chariot 17 de sortir de l'escalier 18. Les positions des freins 4 et 5 lors de la sortie du chariot 17 sont plus clairement visibles à la figure 10.

Les figures 11 à 17 illustrent les phases sucessives de la descente d'un chariot 26 sur l'escalier 18, ce chariot étant muni de roues arrière 27 identiques à la roue des figures 1 et 2, c'est-à-dire comportant chacune deux freins avant et arrière 5.

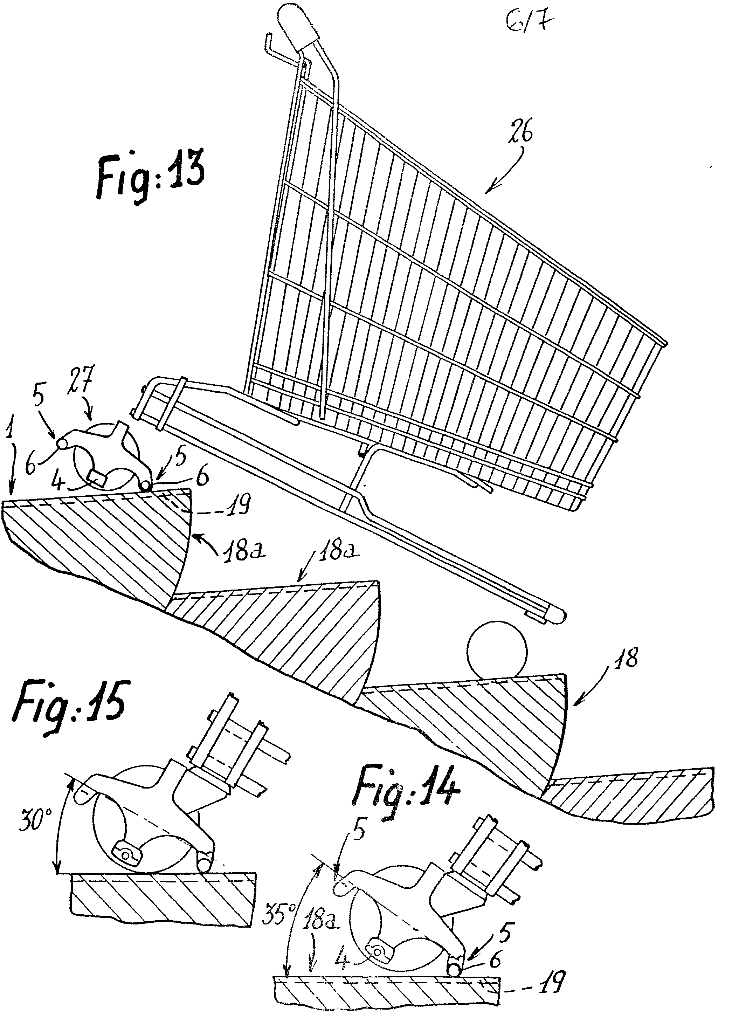

Aux figures 11 et 12, le chariot 26 s'engage au sommet de l'escalier 18, tandis que le frein avant 5 commence à s'incliner vers le bas, le frein arrière 5 restant au-dessus du peigne 29.

Les figures 13 à 15 montrent la position du chariot 26 et des freins 4, 5 pendant la descente de l'escalier 18: celui-ci ayant une pente de 35 degrés (figures 13 et 14), l'ensemble de la roue 27 est soulevé au-dessus de la marche 18a, et le frein avant 5 est en appui sur celle-ci, bloquant le chariot 26.

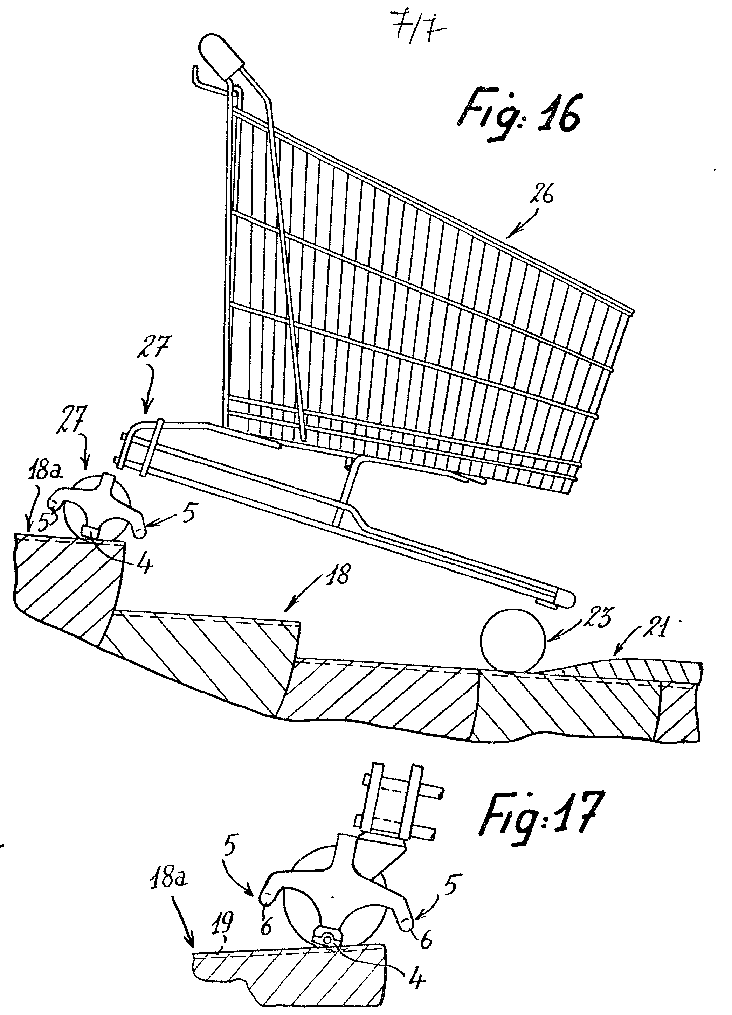

Dans le cas de la figure 15, l'escalier 18 a une pente de 30 degrés seulement, et les bandes de roulement de la roue 1 sont approximativement tangentes aux nervures de la marche 18a.

A la fin de la descente (figures 16 et 17), les roues avant 23 arrivent devant le peigne de sortie 21 tandis que le chariot s'abaisse progressivement jusqu'à l'horizontale, le frein avant 5 se soulevant au-dessus de la marche 18a et le frein latéral 4 revenant en contact avec celle-ci.

Le frein latéral 4 bloque le chariot 27 pendant que les roues 23 avancent sur le peigne 21, permettant la sortie du chariot de façon analogue à la sortie de celui-ci en haut de l'escalier roulant 18.

On voit que la roue 22, munie d'un seul frein arrière 5, ne permet de bloquer le chariot que pendant la montée de l'escalier, tandis que la roue 27 munie de deux freins 5 avant et arrière, permet de bloquer le chariot aussi bien pendant la montée que pendant la descente de l'escalier 18.

Du fait que l'ensemble d'une fourche 7, de son frein 5 et de la chape 8 est monté rotativement sur roulement autour de la patte de fixation 3 au cadre du chariot, il est possible d'utiliser cette disposition pour se servir d'une roue à un seul frein 5, soit comme frein avant, soit comme frein arrière, après orientation convenable de la fourche 7.

Le moletage de l'entretoise 6 du frein 5, comme représenté aux figures 2 et 3, évite tout glissement sur les nervures des marches 18a de l'escalier.

Le fait que les entretoises 6 de blocage soient relativement éloignées de la roue 1 correspondante, par rapport à certaines réalisations connues, présente l'avantage d'augmenter la stabilité de l'assise du chariot sur le frein.

Le frein latéral intérieur 4 fixé dans l'axe de la roue 1 sert de blocage tant que le chariot reste horizontal sur les marches de l'escalier roulant 18 au fur et à mesure que le chariot s'incline, l'entretoise 5, avant ou arrière selon que le chariot descend ou monte, prend le relais et agit pleinement dans la position inclinée du chariot sur l'escalier.

L'invention n'est pas limitée aux formes de réalisation décrites et peut comporter des variantes d'exécution. Ainsi l'entretoise 6 pourrait être remplacée par une garniture analogue à la garniture constituant le frein 4. Mais cette garniture constituant une pièce d'usure serait sensiblement moins avantageuse que l'entretoise moletée 6.

La roue pourrait également être démunie de bandes saillantes de roulement et de patin latéral de freinage.

A titre d'exemple numérique, pour une roue ayant un diamètre de 125 mm, la distance verticale entre la surface d'appui de l'entretoise de blocage 6 et l'axe X–X de la roue peut être de 12 mm, et la hauteur des peignes de l'escalier roulant 30 mm, et leur inclinaison sur l'horizontale de 25 degrés.

**Revendications**

1. Roue pour chariots, notamment de magasins à libre-service dans lesquels les étages sont reliés par des escaliers roulants nervurés, équipée d'un patin (5) situé dans le plan de la roue (1) dans une position telle qu'en position inclinée du chariot il soit en contact avec la surface supérieure d'une marche d'escalier de façon à bloquer ledit chariot , ledit patin étant porté par une fourche (8) dont les bras s'étendent de chaque côté de la roue et sont fixés à une chape (2) dans laquelle est montée celle-ci, caractérisée en ce que cette fourche (8) est montée pivotante autour de l'axe X–X de la roue (1), et des moyens sont prévus pour régler sa position angulaire afin de régler la hauteur du patin (5) de blocage en fonction de l'inclinaison de l'escalier.

2. Roue selon la revendication 1, caractérisé en ce que les moyens prévus pour régler la position angulaire de la fourche (8) portant le patin (5) consistent en un boulon (14) ou téton traversant la partie supérieure (9) de la fourche (8) et en un trou oblong (15) ménagé dans la chape (2) de la roue (1), et pouvant être serré pour fixer la fourche (8) dans la position choisie.

3. Roue selon l'une des revendications 1 et 2, caractérisée en ce que le patin de blocage (5) est constitué d'une entretoise cylindrique (6) moletée pour éviter tout glissement sur les rainures de l'escalier roulant, et fixée aux extrémités des bras (7) de la fourche (8).

4. Roue selon l'une des revendications 1 à 3, caractérisée en ce qu'elle est munie de deux patins (5) de blocage similaires, positionnés l'un à l'avant de la roue (1), et l'autre à l'arrière, le patin avant (5) ayant pour fonction de bloquer la roue et d'immobiliser le chariot lors de la descente d'un escalier roulant, tandis que le patin arrière (5) bloque la roue pendant la montée de l'escalier.

5. Roue selon l'une des revendications 1 à 4, caractérisée en ce qu'elle est pourvue de façon connue en soi d'un patin latéral (4) de freinage, destiné à bloquer le chariot lorsque celui-ci s'engage sur un tapis roulant nervuré, la roue (1) étant à cet effet munie de collerettes périphériques saillantes (1a) qui pénètrent dans les rainures du tapis.

6. Roue selon l'une des revendications 2 et 3, dans laquelle la fourche ou étrier (8) portant le patin de blocage (5) ainsi que la chape (2), sont montées rotativement autour d'un axe vertical, ce qui permet d'orienter le patin (5) pour le faire fonctionner soit comme frein avant pour la descente d'un escalier roulant, soit comme frein arrière pour la montée de cet escalier.

**Patentansprüche**

1. Rolle für Wagen, insbesondere für Selbstbedienungsläden, deren Etagen über gerippt ausgebildete Rolltreppen verbunden sind, mit einem in der Ebene der Rolle (1) in einer solchen Lage angeordneten Blockierschuh (5), dass dieser bei geneigter Lage des Einkaufswagens mit dem hochstehenden Oberflächenbereich einer Treppenstufe in Kontakt ist und dadurch den Einkaufswagen blockiert, und der erwähnte Blockierschuh von einer Gabel (8) getragen ist, deren Arme sich beidseitig der Rollenseiten erstrecken und an einem Gabelgelenk (2) befestigt sind, in welchem diese angeordnet ist, dadurch gekennzeichnet, dass diese Gabel (8) um die Achse X–X der Rolle (1) verschwenkbar angeordnet ist, und dass Mittel zu ihrer Winkelverstellung vorgesehen sind, um die Höhe des Blockierschuhs (5) in Abhängigkeit von der Neigung der Treppe einzustellen.

2. Rolle nach Anspruch 1, dadurch gekennzeichnet, dass die Mittel zur Einstellung der Winkellage der den Blockierschuh (5) tragenden Gabel (8) einen Bolzen (14) oder eine Spitze aufweisen, die den oberen Teil (9) der Gabel (8) und eine längliche Öffnung (15) in dem Gabelgelenk (2) der Rolle (1) durchfassen, und die Mittel zur Befestigung der Gabel (8) in der ausgewählten Lage festschraubbar sind.

3. Rolle nach einem der Ansprüche 1 und 2, dadurch gekennzeichnet, dass der Blockierschuh (5) zur Verhinderung jeglichen Gleitens auf den Rippen der Rolltreppe eine gerändelte, zylindrische Querverbindung (6) aufweist, welche an den Enden der Arme (7) der Gabel (8) befestigt ist.

4. Rolle nach einem der Ansprüche 1 bis 3, dadurch gekennzeichnet, dass diese zwei gleich ausgebildete Blockierschuhe (5) aufweist, von denen einer an der Vorderseite und der andere an der Rückseite der Rolle (1) angeordnet ist, und der vordere Blockierschuh (5) die Aufgabe hat, die Rolle während des Abwärtsfahrens auf einer Rolltreppe zu blockieren und den Wagen unbeweglich zu machen, während der rückwärtige Blockierschuh (5) die Rolle während des Aufwärtsfahrens auf der Rolltreppe blockiert.

5. Rolle nach einem der Ansprüche 1 bis 4, dadurch gekennzeichnet, dass diese in an sich bekannter Weise einen seitlichen Bremsschuh (4) aufweist, der dazu bestimmt ist, den Wagen dann zu blockieren, wenn dieser sich auf einem mit Rillen bzw. Rippen versehenen Plattenbandförderer befindet, und die Rolle (1) zu diesem Zweck mit in die Rillen des Plattenbandfördereres eingreifenden, sich über den Umfang erstreckenden vorspringenden Rändern (1a) versehen ist.

6. Rolle nach einem der Ansprüche 2 und 3, dadurch gekennzeichnet, dass die den Blockierschuh (5) tragende Gabel (8) bzw. ein entsprechender Bügel sowie das Gabelgelenk (2) um eine vertikale Achse drehbar angeordnet sind, was eine Einstellung des Blockierschuhs (5) in der Weise ermöglicht, dass dieser während des Abwärtsfahrens einer Rolltreppe als vordere Bremse und während des Aufwärtsfahrens dieser Treppe als hintere Bremse wirkt.

**Claims**

1. Wheel for trolley, especially for self-service stores in which the stories are linked by means of ribbed escalators, equipped with a shoe (5) located in the plane of the wheel (1) in a position such that, in the inclined position of the trolley, it is in contact with the top surface of an escalator step in order to lock said trolley in position, said shoe being carried by a fork (8), the arms of which extend on each side of the wheel and are attached to a yoke (2) in which this latter is mounted, characterized in that this fork (8) is pivotally mounted about the axis X–X of the wheel (1) and means are provided for adjusting its angular position in order to adjust the height of the locking shoe (5) as a function of the inclination of the escalator.

2. Wheel in accordance with claim 1, characterized in that the means provided for adjusting the angular position of the fork (8) which carries the shoe (5) consist of a bolt (14) or stud which passes through the top portion (9) of the fork (8) and of an oblong hole (15) formed in the yoke (2) of the wheel (1) and which can be tightened in order to fix the fork (8) in the position chosen.

3. Wheel in accordance with either of claims 1 and 2, characterized in that the locking shoe (5) is constituted by a cylindrical spacer member (6) which is knurled in order to prevent any sliding along the grooves of the escalator and which is attached to the ends of the arms (7) of the fork (8).

4. Wheel in accordance with one of claims 1 to 3, characterized in that it is provided with two similar locking shoes (5) one of which is positioned on the front side of the wheel (1) and the other is positioned on the rear side, the function of the front shoe (5) being to lock the wheel and to maintain the trolley in a stationary position during downward travel of an escalator whilst the rear shoe (5) locks the wheel during upward travel of the escalator.

5. Wheel in accordance with one of claims 1 to 4, characterized in that it is provided in a manner known per se with a lateral braking shoe (4) which is intended to lock the trolley when this latter engages on a ribbed moving walkway, the wheel (1) being provided for this purpose with projecting peripheral annular flanges (1a) which penetrate into the grooves of the walkway.

6. Wheel in accordance with either of claims 2 and 3, in which the fork or stirrup-piece (8) which carries the locking shoe (5) as well es the yoke (2) are rotatably mounted about a vertical axis, thus making it possible to orient the shoe (5) in order to cause it to operate either as a front brake for the downward travel of an escalator or as a rear brake for the upward travel of this escalator.

Fig:3

Fig:1

Fig:2

1/7

0 052 528

Fig:4

Fig:5

**Fig:6**

3/7

17

23

18a 1 22

4 5

**Fig:7**

17

22

1

30°

4 5 6

18

**Fig:8**

17

22

1

35°

4 5 6

Fig. 9

17

25

23

18

19

22

1

5

4

6

18a

17

22

1

5

4

6

19

Fig. 10

Fig: 11

26

27

5

6

29

6

5

6

4

18

1

5

29

Fig: 12

5

4

6/7

**Fig.13**

26

27

5

1

6

4

5

6

19

18a

18a

18

**Fig.15**

30°

**Fig.14**

5

35°

18a

4

5

6

19

17

7/7

**Fig. 16**

26

27

27

18a

5

5

4

18

23

21

**Fig. 17**

5

18a

19

5

6

6

4